Europäisches Patentamt

European Patent Office

Office européen des brevets

(11) Publication number: **0 096 508**
**B1**

(12) **EUROPEAN PATENT SPECIFICATION**

(45) Date of publication of patent specification: **31.07.85**

(51) Int. Cl.⁴: **C 04 B 35/04**

(21) Application number: **83302984.6**

(22) Date of filing: **24.05.83**

(54) **Magnesia-carbon refractory.**

(30) Priority: **28.05.82 JP 89765/82**

(43) Date of publication of application:
**21.12.83 Bulletin 83/51**

(45) Publication of the grant of the patent:
**31.07.85 Bulletin 85/31**

(84) Designated Contracting States:
**AT BE DE FR GB IT LU NL SE**

(56) References cited:
**DE-A-2 248 125**
**GB-A-2 040 911**
**US-A-3 442 669**

**CHEMICAL ABSTRACTS, vol. 96, no. 18, May
1982, page 332, no. 147855y, Columbus, Ohio,
USA**

**CHEMICAL ABSTRACTS, vol. 92, no. 24, June
1980, page 261, no. 202502a, Columbus, Ohio,
USA**

(73) Proprietor: **Shinagawa Rozai Kabushiki kaisha**
**11-70, Kizaki 5-chome**
**City of Akashi Hyogo Prefecture (JP)**

(73) Proprietor: **SHINAGAWA REFRACTORIES CO.,
LTD.**
**2-1, Ohtemachi 2-chome Chiyoda-ku
Tokyo 100 (JP)**

(72) Inventor: **Motoya, Sunao**
**30-8, Iwazono-cho**
**City of Ashiya Hyogo Prefecture (JP)**
Inventor: **Watanabe, Jiro**
**1068, Fujie**
**City of Akashi Hyogo Prefecture (JP)**
Inventor: **Ohara, Kengo**
**1-17-314, Miyanoue**
**City of Akashi Hyogo Prefecture (JP)**
Inventor: **Kuroe, Masami**
**2-1-31, Higashi Fujie**
**City of Akashi Hyogo Prefecture (JP)**
Inventor: **Nishio, Hideaki**
**314-8, Akoda**
**City of Okayama Okayama Prefecture (JP)**

(74) Representative: **Godwin, Edgar James et al
MARKS & CLERK 57-60 Lincoln's Inn Fields
London, W.C.2A 3LS (GB)**

Courier Press, Leamington Spa, England.

## Description

The present invention relates to unburned magnesia-carbon refractories comprising fine powder as a major component and having excellent resistance to corrosion and oxidation. More specifically, it relates to an improved magnesia-carbon (hereinafter referred to as MgO—C) refractory particularly appropriate for use in refining operations under severe working conditions.

Refining outside the converter has become commonplace in steel manufacture. For example, in ASEA—SKF, VAD, LF, and similar types of ladles, arc heating, stirring, and vacuum degasification are carried out. Accordingly, refractories used as lining materials in such ladles are exposed to extremely severe working conditions.

In particular, damage to the refractory lining in the slag line portion of the ladle is very great. In the past, normal direct bonded and rebonded magnesia-chrome bricks and dolomite bricks were used in the slag line portion, but stripping damage of these types of bricks due to attack by slag as well as heat and mechanical spalling is very great. Therefore, in recent years they have come to be replaced by unburned MgO—C bricks in ASEA—SKF and other types of ladles. However, even when using unburned MgO—C bricks, the slag line portion experiences considerable damage owing to the severity of the working conditions, and a satisfactory unburned MgO—C brick for use in ladles has yet to be found.

Unburnt magnesia-carbon refractory materials containing magnesia (which will be present both as fine grains and as powder) and graphite fine powder, as well as an anti-oxidizing additive such as Al or Si, are disclosed in Chemical Abstracts, vol. 92. No. 24, 1980, p. 261, No. 202502a and in DE—A—2 248 125.

In the course of experiments aimed at producing an MgO—C brick having improved properties, the present inventors made the following observations.

1) If the space between fine aggregate particles of the brick is sufficiently filled with graphite, a closed cell structure is formed which results in the brick having increased resistance to corrosion.

2) If the amount of MgO fine powder in the brick is too large, laminations develop at the time of moulding.

3) In conventional MgO—C bricks, coarse grains of magnesia are used to give the brick compactness and resistance to corrosion. However, if the amount of coarse grains is too large, the refractory will split when pressure is applied to it during moulding, owing to the veins in the coarse grains. In particular, veins are numerous in high grade electrofused MgO grains. While electrofused MgO is very effective in providing corrosion resistance, its grains split very easily when pressure is applied.

4. Graphite in refractories acts as a lubricant and increases compactness.

From the above observations, it was deduced that, by limiting the magnesia grain size to a level lower than that used in the prior art, a magnesia-carbon brick having greater compactness and greater resistance to corrosion than the unburned MgO—C bricks according to the prior art should be achievable. Further, by using MgO grains of small grain diameter, it should be possible to mould the brick without producing laminations.

The unburned MgO—C refractory according to the present invention has a completely different grain size distribution from unburned MgO—C refractories according to the prior art. It comprises 100 parts by weight of refractory raw materials, the refractory raw materials comprising at most 30 parts by weight of fine grains of magnesia having a grain diameter of 1.5 to 0.3 mm and at least 70 parts by weight of graphite fine powder having a particle diameter of at most 1 mm and magnesia fine powder having a particle diameter of at most 0.3 mm, the weight ratio of graphite to magnesia being from 2.5 to 0.4, and preferably further comprises 1 to 6 parts by weight of an anti-oxidizing additive, the additive comprising at least one substance selected from the group consisting of aluminium, silicon, $B_4C$, and SiC.

The invention will be described further, by way of example, with reference to the accompanying drawings, in which:

Figure 1 is a graph showing the bulk density of seven MgO—C bricks comprising fine graphite powder and fine MgO Powder, each having a different weight ratio of graphite to MgO; and

Figure 2 is a graph showing the apparent porosity of each of 7 different MgO—C bricks comprising fine graphite powder and fine MgO powder after drying at 150°C for 10 hours and after burning in a reducing atmosphere at 1000°C for 3 hours.

In conventional unburned MgO—C bricks, an aggregate having a maximum particle diameter of 5 mm (with a large percentage of the aggregate having a diameter of 2.38 mm) is normally used. When refractory raw materials comprising such a coarse aggregate are subjected to moulding pressure. The aggregate grains come directly into contact with one another and the fine powder portion which fills the spaces between coarse grains of the aggregate is prevented from being compressed, resulting in insufficient compactness.

However, in the present invention, a refractory of great compactness is achieved by limiting the size of the aggregate to 1.5 mm—0.3 mm, the diameter of the fine powder portion consequently being limited to at most 0.3 mm. When refractory raw materials comprising this aggregate are compressed at the time of moulding, the fine powder portion between the aggregate grains can be fully compressed, and laminations do not occur.

Generally, unburned bricks having a fine powder structure have considerable burning shrinkage and are lacking in serviceability. In the present invention, however, the addition of graphite holds down this

# 0 096 508

shrinkage. Because the graphite is able to be fully compressed during moulding, the resulting unburned brick has low air permeability, and oxidation loss of the graphite is prevented.

The resistance of the graphite to oxidation may be further increased by the addition of a conventionally-used anti-oxidizing agent comprising at least one substance selected from aluminium, silicon, $B_4C$, and SiC. This additive comprises 1 to 6 parts by weight of the unburned refractory per 100 parts by weight of refractory raw materials.

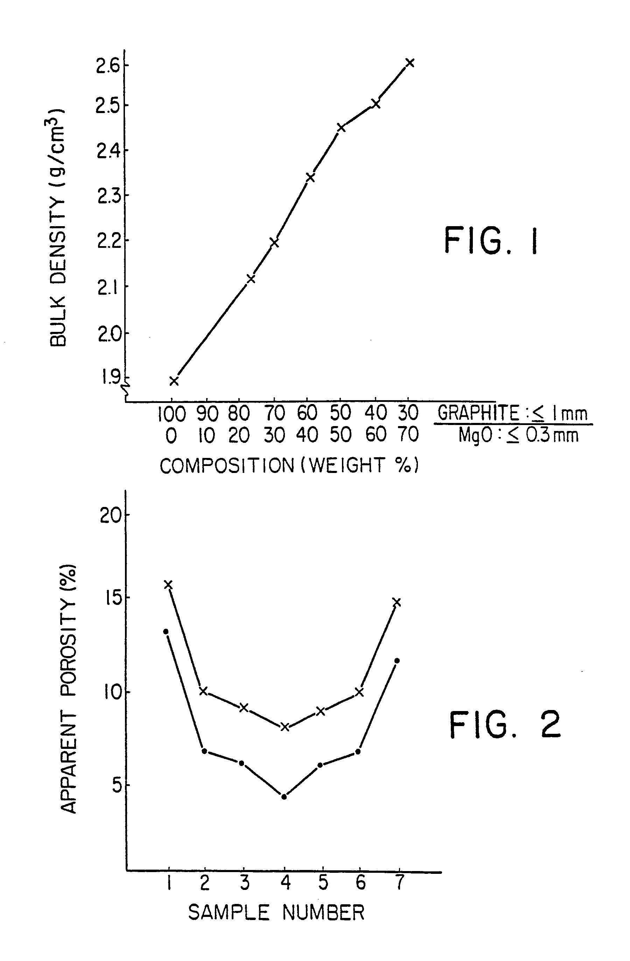

Figure 1 shows the results of an experiment measuring the bulk density (used as an index of compactness) of a number of bricks comprising a fine powder. Mixtures containing graphite (having a particle diameter of at most 1 mm) and MgO (having a particle diameter of at most 0.3 mm) in various ratios were prepared and moulded at 1000 kg/cm$^2$ (98 N/mm$^2$) into standard bricks (230 × 114 × 65 mm). As seen from Figure 1, graphite and MgO fine powder used in ratios in accordance with the present invention produced bricks having high compactness.

To determine the best proportion of electrofused magnesia clinker to graphite in the fine powder portion of the unburned refractory, specimens were prepared comprising seven different mixtures of graphite and MgO, as shown in Table 1. The blends shown in the table were moulded at 1000 kg/cm$^2$ (98 N/mm$^2$) into standard bricks, using liquid resol resin as a binder, dried at 150°C for 10 hours, and then burned in a reducing atmosphere at 1000°C for 3 hours. Figure 2 shows the apparent porosity of these bricks after drying (the .—. line) and after reduction burning (the X—X line).

TABLE 1

(units: parts by weight)

| Raw Materials | Sample No. | | | | | | |
|---|---|---|---|---|---|---|---|
| | 1 | 2 | 3 | 4 | 5 | 6 | 7 |
| Electro-fused magnesia clinker $\leq$ 0.3 mm dia. | 20 | 30 | 40 | 50 | 60 | 70 | 80 |
| Crystalline graphite $\leq$ 1.0 mm dia. | 80 | 70 | 60 | 50 | 40 | 30 | 20 |
| Liquid resol resin | 6 | 6 | 6 | 6 | 6 | 6 | 6 |

Specimens No. 1 and 7 had an extremely high apparent porosity, and are therefore unsuitable.

It is clear that a fine powder structure of which the weight ratio of graphite to MgO is in the range of approximately 0.4:1 to approximately 2.5:1 (represented by Specimens 2—6) is appropriate.

For the purpose of comparison, the inventors measured the bulk density of a first, conventional unburned MgO refractory comprising 55% by weight of MgO coarse particles (5.3—1.5 mm particle diameter), 20% by weight of MgO fine powder (at most 0.3 mm particle diameter), and 25% by weight of graphite. The refractory as a whole had a bulk density of approximately 2.85—2.90. The fine powder portion, however, had a bulk density of approximately 2.20 (a figure obtained by subtracting the bulk density of the MgO coarse particles) indicating a low degree of compactness. In contrast, the bulk density of a second refractory comprising 25% by weight of MgO (1.5—0.3 mm particle diameter), 50% by weight of MgO fine powder (at most 0.3 mm particle diameter), and 25% by weight of graphite (at most 1.0 mm particle diameter) and a high bulk density of 2.61, indicating extremely high packing of the fine powder portion.

In addition, after heating in a reducing atmosphere at 1000°C for 3 hours, the above-described first (conventional) refractory had an air permeability index of 0.096 × 10$^{-2}$cm$^3$.cm/cm$^2$.cm H$_2$O.sec, while the unburned secondary refractory had a far lower value of 0.019 × 10$^{-2}$cm$^3$.cm/cm$^2$.cm H$_2$O.sec. This indicates that the inner structure of the second refractory is extremely minute and homogeneous. It is also clear that the fine powder structure is effective in providing resistance to corrosion.

Next, 50 mm × 50 mm × 50 mm cubes were cut from the above-described unburned MgO—C refractories. The cubes were machined, heated in an oxidizing atmosphere in an electric furnace at 1500°C for 2 hours, and then cooled, after which they were cut open in order to measure decarburization depth. While the first (conventional) unburned MgO—C refractory had a decarburization depth of 9 mm, the second unburned MgO—C refractory had a decarburization depth of only 3 mm.

In addition, when 1 part by weight of $B_4C$ and 2 parts by weight of Al per 100 parts by weight of refractory materials were added to the second refractory as an anti-oxidizing agent to prevent oxidation of the graphite, the decarburization depth was further decreased to 2 mm.

3

### Example

The raw materials shown in Table 2 were formed into unburned bricks by moulding at 1000 kg/cm$^2$ (98 N/mm$^2$). Moulding was followed by drying at 150°C for 10 hours and reduction burning at 1000°C for 3 hours. After drying and burning, the various properties shown in Table 2 were measured. The completed bricks were then used to line the slagline portion of an ASEA—SKF 90-ton ladle, disposed at the 10th and 11th rows of bricks on both the slag line and trunion side. In the bricks according to the present invention, the weight ratio of graphite fine powder to magnesia fine powder was 1:1.

TABLE 2

| Composition of Refractory (parts by weight) | Raw Materials | | Grain Size (mm) | Prior Art | Present Invention |
|---|---|---|---|---|---|
| | Electro-fused magnesia clinker | | 5 − 3 | 15 | — |
| | ,, | | 3 − 1 | 30 | — |
| | ,, | | 1.5 − 0.3 | 25 | 20 |
| | ,, | | $\leq 0.3$ | 10 | 40 |
| | Crystalline graphite | | $\leq 1.0$ | 20 | 40 |
| | Al (commercial product) | | Micropulverized Powder | 3 | 3 |
| | $B_4C$ ( ,, ) | | ,, | 1 | 1 |
| | Liquid resol resin | | — | 3.5 | 4 |
| Characteristics | After drying at 150°C for 10 hours | Water absorption (%) | | 1.7 | 2.2 |
| | | Apparent porosity (%) | | 5.0 | 5.6 |
| | | Bulk density $(g/cm^3)$ | | 2.84 | 2.58 |
| | | Apparent specific gravity $(g/cm^3)$ | | 2.99 | 2.73 |
| | | Cold Crushing Strength $(N/mm^2)$ | | 28.5 | 25.8 |
| | After reduction burning at 1000°C for 3 hours | Water absorption (%) | | 2.8 | 3.5 |
| | | Apparent porosity (%) | | 7.9 | 9.0 |
| | | Bulk density $(g/cm^3)$ | | 2.87 | 2.57 |
| | | Apparent specific gravity $(g/cm^3)$ | | 3.11 | 2.82 |
| | | Cold crushing strength $(N/mm^2)$ | | 27.3 | 26.1 |
| | | Air permeability $(\times 10^{-2} cm^3 . cm /cm^2 . cm\,H_2O . second)$ | | 0.102 | 0.026 |

## 0 096 508

After the ladle had been used 22 times using bricks according to the present invention, the dimension of the bricks were measured. The thickness of the bricks according to the present invention decreased by 33 mm from 150 mm to 117 mm. In contrast, conventional MgO—C bricks which were used in the same ladle under the same conditions (the content of the conventional bricks is shown in Table 2) had a decrease in thickness of 50 mm from 150 mm to 91 mm, giving clear proof of the increased durability of the MgO—C bricks according to the present invention.

### Claims

1. An unburnt magnesia-carbon refractory material which comprises refractory raw materials comprising grains of magnesia, graphite fine powder, and magnesia fine powder, characterised in that the refractory raw materials comprise at most 30 percent by weight of fine grains of magnesia having a grain diameter of 1.5 to 0.3 mm and at least 70 percent by weight of graphite fine powder having a particle diameter of at most 1 mm and magnesia fine powder having a particle diameter of at most 0.3 mm, the weight ratio of graphite to magnesia fine powder being in the range from 2.5:1 to 0.4:1.

2. An unburned magnesia-carbon refractory material which comprises refractory raw materials and an anti-oxidizing additive, the refractory raw materials comprising grains of magnesia, graphite fine powder, and magnesia fine powder, characterised in that the unburned magnesia-carbon refractory material comprises:

100 parts by weight of refractory raw materials comprising at most 30 parts by weight of fine grains of magnesia having a grain diameter of 1.5 to 0.3 mm and at least 70 parts by weight of graphite fine powder having a particle diameter of at most 1 mm and magnesia fine powder having a particle diameter of at most 0.3 mm, the weight ratio of graphite to magnesia fine powder being in the range from 2.5:1 to 0.4:1; and

1 to 6 parts by weight of an anti-oxidizing additive, the additive comprising at least one substance selected from aluminium, silicon, $B_4C$, and SiC.

3. A magnesia-carbon refractory material obtained by moulding and burning a material as claimed in any of claims 1 or 2.

### Patentansprüche

1. Ungebranntes feuerfestes Material mit Magnesit-Kohlenstoff, das feuerfeste Rohmaterialien enthält, die Magnesiumoxidkörner, Graphit-Feinpulver und Magnesiumoxid-Feinpulver enthalten, dadurch gekennzeichnet, daß die feuerfesten Rohmaterialien höchstens 30 Gew.-% Magnesiumoxid-Feinkörner mit einem Korndurchmesser von 1,5 bis 0.3 mm und mindestens 70 Gew.-% Graphit-Feinpulver mit einem Teilchendurchmesser vom höchstens 1 mm und Magnesiumoxid-Feinpulver mit einem Teilchendurchmesser von höchstens 0,3 mm enthalten, wobei das Gewichtsverhältnis des Graphit-Feinpulvers zum Magnesiumoxid-Feinpulver im Bereich von 2,5:1 bis 0,4:1 liegt.

2. Ungebranntes feuerfestes Material mit Magnesit-Kohlenstoff, das feuerfeste Rohmaterialien und einen Antioxidationszusatz enthält, wobei die feuerfesten Rohmaterialien Magnesium-oxidkörner, Graphit-Feinpulver und Magnesiumoxid-Feinpulver enthalten, dadurch gekennzeichnet, daß das ungebrannte feuerfeste Material mit Magnesit-Kohlenstoff enthält:

100 Gewichtsteile feuerfeste Rohmaterialien, die höchstens 30 Gewichtsteile Magnesiumoxid-Feinkörner mit einem Korndurchmesser von 1,5 bis 0,3 mm und mindestens 70 Gewichtsteile Graphit-Feinpulver mit einem Teilchendurchmesser von höchsten 1 mm und Magnesiumoxid-Feinpulver mit einem Teilchendurchmesser von höchstens 0,3 mm enthalten, wobei das Gewichtsverhältnis des Graphit-Feinpulvers zum Magnesium-Feinpulver im Bereich von 2,5:1 bis 0,4:1 liegt, und

1 bis 6 Gewichtsteile eines Antioxidationszusatzes, wobei der Zusatz mindestens eine der Substanzen Aluminium, Silizium $B_4C$ und SiC enthält.

3. Feuerfestes Material mit Magnesit-Kohlenstoff, dadurch gekennzeichnet, daß es durch Formen und Brennen eines Materials nach den Ansprüchen 1 oder 2 erhalten wurde.

### Revendications

1. Matière réfractaire de magnésie-carbone non cuite, contenant des matières premières réfractaires qui comprennent des grains de amgnésie, de la poudre fine de graphite et de la poudre fine de magnésie, caractérisée en ce que les matières premières réfractaires comprennent au maximum 30% en poids de grains fins de magnésie ayant un diamètre de 1,5 à 0,3 mm et au minimum 70% en poids de poudre fine de graphite ayant un diamètre de particules de 1 mm au maximum et de poudre fine de magnésie ayant un diamètre de particules de 0,3 mm au maximum, le rapport pondéral du graphite à la poudre fine de magnésie se situant dans la gamme de 2,5:1 à 0,4:1.

2. Matière réfractaire de amgnésie-carbone non cuite, contenant des matière premières réfractaires et un additif anti-oxydant, les matières premières réfractaires comprenant des grains de magnésie, de la poudre fine de graphite et de la poudre fine de magnésie, caractérisée en ce que la matière réfractaire de magnésie-carbone non cuite se compose de:

100 parties en poids de matières premières réfractaires comprenant au maximum 30 parties en poids

6

de grains fins de magnésie ayant un diamètre de grain de 1,5 à 0,3 mm et au minimum 70 parties en poids de poudre fine de graphite ayant un diamètre de particules de 1 mm au maximum et de poudre fine de magnésie ayant un diamètre de particules de 0,3 mm au maximum, le rapport pondéral du graphite à la poudre fine de magnésie se situant dans la gamme de 2,5:1 à 0,4:1, et de 1 à 6 parties en poids d'un additif anti-oxydant, l'additif comprenant au moins une substance choisie parmi l'aluminium, le silicium, $B_4C$ et SiC.

3. Matière réfractaire de magnésie-carbone, obtenue par le moulage et la cuisson d'une matière selon la revendication 1 ou 2.

FIG. 1

FIG. 2

1